# EUROPEAN PATENT SPECIFICATION

(11) **EP 3 163 400 B1**
(45) Date of publication and mention of the grant of the patent: **21.04.2021**
(21) Application number: 16001282.9
(22) Date of filing: 07.06.2016
(51) Int. Cl.: G05D 23/13

(54) **A DOUBLE-HANDLE COAXIAL TEMPERATURE CONTROL VALVE SPOOL**
KOAXIALE TEMPERATURREGELUNGSSCHIEBERVENTILSPULE MIT DOPPELGRIFF
TIROIR DE RÉGULATION DE TEMPÉRATURE COAXIAL À CLIQUET DOUBLE

(30) Priority: 27.10.2015 CN 201510706188
(43) Date of publication of application: 03.05.2017
(73) Proprietor: Xiamen Solex High-Tech Industries Co., Ltd., Xiamen Area of China (Fujian) Pilot Free Trade Zone (CN)
(72) Inventor: WEI, Zhijian, 361000 Fujian (CN); WU, Yuzhi, 361000 Fujian (CN); HU, Lihong, 361000 Fujian (CN)
(74) Representative: Verscht, Thomas Kurt Albert

(56) References cited:
- EP-A1- 0 566 433
- EP-B1- 0 569 437
- GB-A- 2 487 162
- US-A1- 2008 093 470

## Description

### Field of the invention

The present invention relates to a double-handle coaxial temperature control valve spool.

### Background of the invention

Existing constant temperature tap (especially the constant temperature shower head) is applied with a temperature control valve spool, which mainly comprises a valve body with a cool water inlet, a hot water inlet and a mixing water outlet, a plunger slidably disposed in the valve body, a thermosensitive element connected to the plunger with a thermosensitive port and a flexible port, a push rod and a spring respectively abutting against the thermosensitive element and an adjusting rod connected to the push rod. The thermosensitive port of the thermosensitive element is placed at the mixing water outlet, the flexible port is connected to the push rod, when the temperature of the mixing water outlet changes, the thermosensitive port of the thermosensitive element senses the temperature and make the flexible port extend or shrink, thus driving the plunger to move, so as to adjust the proportion of the cool water inlet and the hot water inlet to change the flow rate proportion of the hot water and cool water, thus achieving constant temperature. It needs two adjusting devices, one is used to adjust the flow rate, the other is used to adjust the water temperature. In the existing technology, as described in US 2008/093 470 A1 for example, the temperature adjusting device is disposed at the top end of the temperature control valve spool, the flow rate adjusting device is disposed below the temperature adjusting device, when to adjust the flow rate, the user usually touches the temperature adjusting device. As it is more frequent to adjust the flow rate, this setting method makes the outlet temperature unstable, the temperature changes with the changing of the flow rate, it doesn't conform with the user's habit.

Document EP 0 566 433 A1 discloses a mixing valve and a thermostatic capsule. The thermodynamic capsule, comprises a housing, a tubular guide crimped in the housing, a leaktight and deformable membrane associated with an expansible substance for actuating a piston, is noteworthy in that the tubular guide and the housing are fitted externally with bearing surfaces respectively, allowing them to be integrated in rotation with two different rotating elements of a user appliance, while allowing relative translational movement of the assembly of the tubular guide and of the housing with respect to these two rotating elements. In order to control the water flow rate, the discs and have an arrangement of apertures for varying the water output rate when rotation of the central disc.

### Summary of the invention

The present invention is provided with a double-handle coaxial temperature control valve spool to solve the main technical problems, the present invention is disposed with rotating adjusting portions coaxially arranged from top to bottom, the upper rotating portion is used to open the mixing water outlet, the lower rotating portion is used to adjust the outlet temperature of the mixing water outlet.

The technical proposal of the present invention is that: a double-handle coaxial temperature control valve spool, comprising: a valve body, the valve body is disposed with a cool water inlet, a hot water inlet and a mixing water outlet;
a thermosensitive element with a thermosensitive port and a flexible port, the thermosensitive port is near to the mixing water outlet to sense the outlet temperature of the mixing water outlet and send the outlet temperature information to the flexible port;
an adjusting element with a first rotating adjusting portion and a second rotating adjusting portion coaxially arranged from top to bottom; the first rotating adjusting portion is linked to a flow rate adjusting portion, when rotating the first rotating adjusting portion, the flow rate adjusting portion opens or closes the mixing water outlet in an axial direction; the second rotating adjusting portion is linked to a temperature adjusting portion, when rotating the second rotating adjusting portion, the temperature adjusting portion adjusts the flowing area of the cool water inlet and the hot water inlet;
the second rotating adjusting portion is arranged between a first external spline of the first rotating adjusting portion and the mixing water outlet.

In another preferred embodiment, the adjusting element comprises a central rod, the external periphery of the central rod is disposed with a first driving mechanism and a second driving mechanism in the axial direction.

In another preferred embodiment, the first rotating adjusting portion comprises a spline rod, the external periphery of one end of the spline rod is disposed with a first external spline; by rotating the first external spline, the spline rod and the central rod rotate coaxially by the first driving mechanism.

In another preferred embodiment, the flow rate adjusting portion comprises a rotating rod and a first guiding rod coaxially arranged; when the central rod rotates, the rotating rod rotates coaxially by the second driving mechanism; the rotating rod couples to the first guiding rod by a first driving thread, when the rotating rod rotates, the first guiding rod moves up and down in the axial direction.

In another preferred embodiment, the end of the first guiding rod is vertically connected to the mixing water outlet; the mixing water outlet is disposed with a first sealing pad coupled to the end of the first guiding rod, when the end of the first guiding rod moves to abut against the first sealing pad, the mixing water outlet is fully closed.

In another preferred embodiment, the first driving mechanism is a second external spline, the second driving mechanism is an external hexagon element.

In another preferred embodiment, the second rotating adjusting portion comprises an adjusting rod and a press rod coaxially arranged with the central rod; the adjusting rod is coupled to one end of the press rod by a second driving thread, when the adjusting rod rotates, the press rod moves up and down in the axial direction.

In another preferred embodiment, the other end of the press rod is linked to the central rod in the axial direction.

In another preferred embodiment, the temperature adjusting portion comprises a second guiding rod and a plunger; the second guiding rod is disposed between the thermosensitive element and the central rod, the second guiding rod is respectively linked to the thermosensitive element and the central rod in the axial direction; the plunger is coaxially disposed at the external periphery of the flexible port of the thermosensitive element and is linked to the thermosensitive element in the axial direction.

In another preferred embodiment, two ends of the plunger are respectively vertically connected to the cool water inlet and the hot water inlet, the hot water inlet is disposed with a second sealing pad coupled to one end of the plunger, when this end of the plunger moves to abut against the second sealing pad, the hot water inlet is fully closed.

In another preferred embodiment, the valve body comprises an external housing and a lower housing, the external periphery surface of the lower housing is disposed with the cool water inlet and the hot water inlet coaxially from top to bottom; the mixing water outlet is disposed at the external periphery of the external housing; the top end of the lower housing extends into the external housing and is respectively connected to the first guiding rod and the second guiding rod by hexagon connecting or thread connecting.

In another preferred embodiment, the side of the external periphery of the plunger is disposed with a first sealing ring and a second sealing ring parallel arranged to contact with the internal wall of the lower housing.

In a reference example of a technical proposal of the present invention, a water mixer is further provided, one end of the water mixer is linked to the second guiding rod, the other end is linked to the plunger, the water mixer is disposed with a plurality of mixing holes; water from the cool water inlet and the hot water inlet is mixed in the water mixer

Compared to existing known technology, the technical proposal of the present invention has advantages as follows:
The present invention is provided with a double-handle coaxial temperature control valve spool, which is disposed with rotating adjusting portions coaxially arranged to adjust the flow rate and the temperature, the upper first rotating portion is used to adjust the flow rate, the lower second rotating portion is used to adjust the outlet temperature. So that it is not easy to touch the temperature adjusting switch when adjusting the flow rate, it conforms to the user's habit.

The double-handle coaxial temperature control valve spool is disposed with a central rod, the external periphery of the central rod is disposed with an external spline and an external hexagon arranged coaxially, with the rotatable rotating rod and the movable press rod, when the first rotating portion rotates, the central rod coaxially rotates; when the second rotating portion rotates, the central rod moves up and down.

The double-handle coaxial temperature control valve spool is provided that hot water and cool water flow to the valve body, mix in the water mixer and finally flow through the thermosensitive port of the thermosensitive element, so that the thermosensitive port of the thermosensitive element senses more accurately, it further guarantees the constant temperature control effect.

The double-handle coaxial temperature control valve spool is provided that the hot water inlet is disposed with a sealing pad coupled to one end of the plunger, when the cool water inlet is invalid, the flexible port extends quickly to drive the plunger to move downwardly, when the plunger moves to make its one end abut against the second sealing pad, the hot water inlet is fully closed.

Therefore, it makes sure that when the cool water inlet is invalid, the hot water inlet can be closed in time, so that hot water would not flow out that guarantees the usage safety.

The double-handle coaxial temperature control valve spool is provided that the side surface of the external periphery of the plunger is disposed with two sealing rings contacted with the internal wall of the lower housing. It avoids the plunger from shaking or block when the water pressure increases or the water pressure suddenly changes.

### Brief description of the drawings

FIG.1 illustrates a schematic diagram of a preferred embodiment of the present invention.
FIG.2 illustrates an exploded and schematic diagram of the preferred embodiment of the present invention.
FIG.3 illustrates a schematic diagram of main components of the preferred embodiment of the present invention.
FIG.4 illustrates a sectional diagram of the preferred embodiment of the present invention when the mixing water outlet is closed.
FIG.5 illustrates a sectional diagram of the preferred embodiment of the present invention when the mixing water outlet is open.
FIG.6 illustrates a sectional diagram of preferred embodiment when the cool water inlet is open and the hot water inlet is closed.
FIG.7 illustrates a sectional diagram of the preferred embodiment of the present invention when the cool water inlet is closed and the hot water inlet is open.

### Detailed description of the embodiments

The present invention will be further described with the drawings and the embodiments.

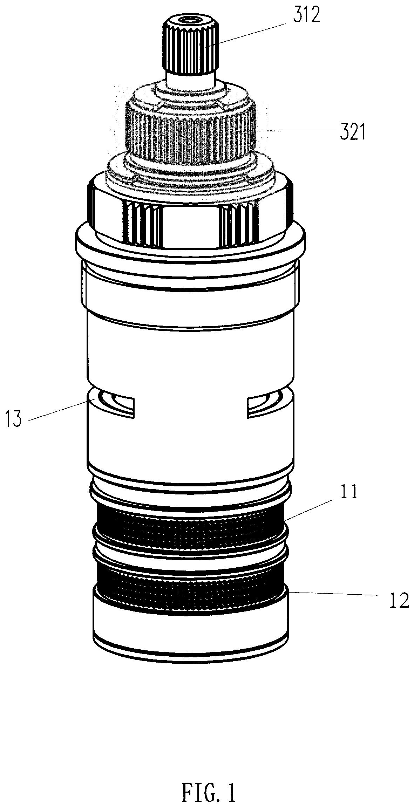

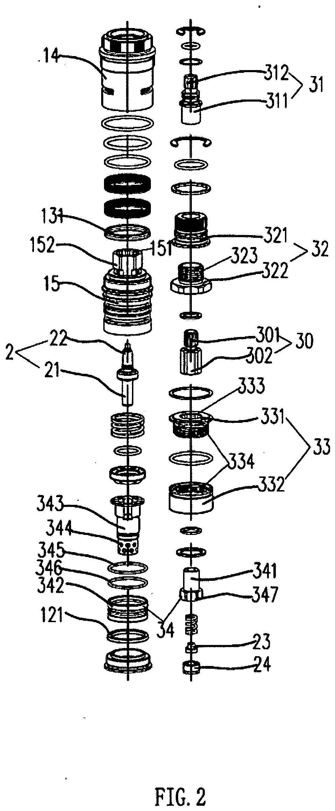

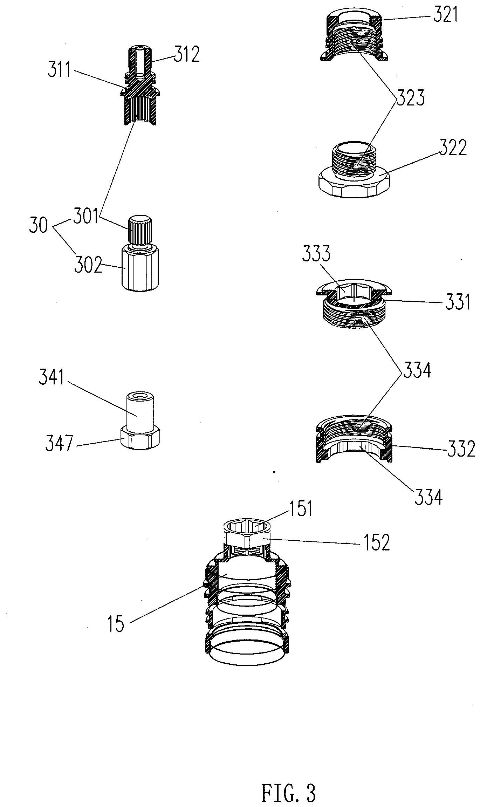

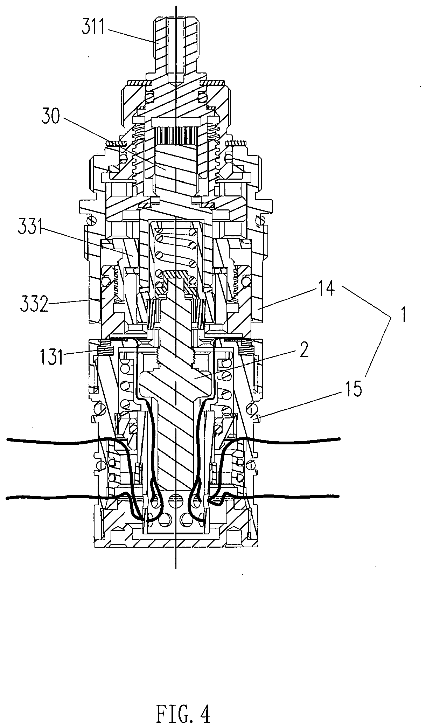

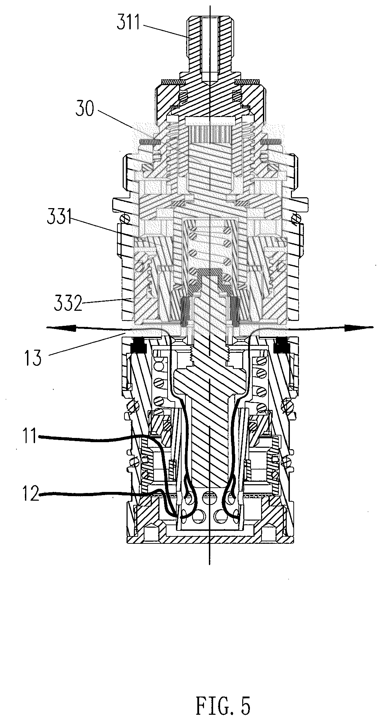

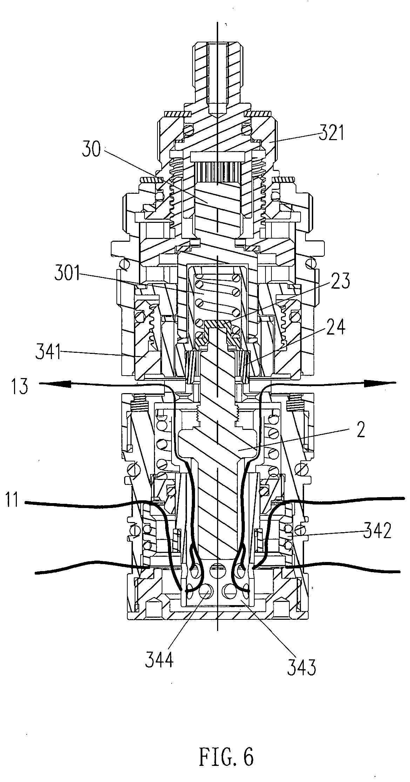

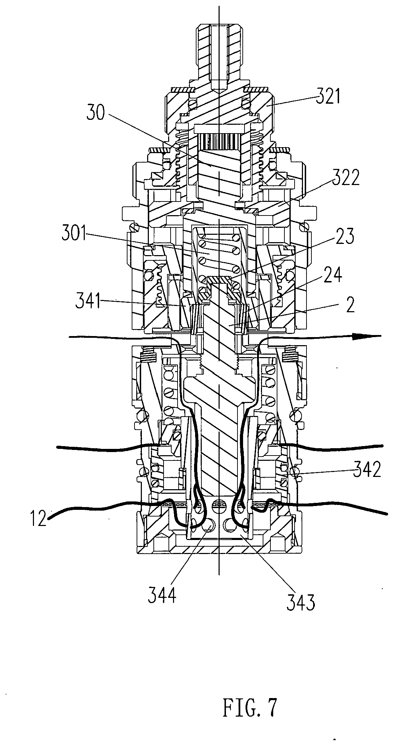

Referring to FIGs 1-7, a double-handle coaxial temperature control valve spool comprises:
A valve body 1 with a cool water inlet 11, a hot water inlet 12 and a mixing water outlet 13; the valve body 1 comprises an external housing 14 and a lower housing 15, the external periphery surface of the lower housing 15 is disposed with the cool water inlet 11 and the hot water inlet 12 coaxially from top to bottom; the mixing water outlet 13 is disposed at the external periphery of the external housing 14; the top end of the lower housing 15 extends into the external housing 14 and is fixedly connected to the external housing 14.

A thermosensitive element 2 with a thermosensitive port 21 and a flexible port 22, the thermosensitive port 21 is near to the mixing water outlet 13 to sense the outlet temperature of the mixing water outlet 13 and to send the outlet temperature information to the flexible port 22;

An adjusting element with a first rotating adjusting portion 31 and the second rotating adjusting portion 32 arranged coaxially from top to bottom; the first rotating adjusting portion 31 is linked to a flow rate adjusting portion 33, when the first rotating adjusting portion 31 rotates, the flow rate adjusting portion 33 opens or closes the mixing water outlet 13, so as to change the flowing area of the mixing water outlet 13, thus adjusting the outlet flow rate. The second rotating adjusting portion 32 is linked to a temperature adjusting portion 34, when the second rotating adjusting portion 32 rotates, the temperature adjusting portion 34 adjusts the flowing area of the cool water inlet 11 and the hot water inlet 12, so as to adjust the proportion of the cool water and the hot water in the mixing water, thus adjusting the outlet temperature of the mixing water outlet.

The double-handle coaxial temperature control valve spool is provided that the upper first rotating adjusting portion 31 is used to adjust the flow rate, the lower second rotating adjusting portion 32 is used to adjust the water temperature. So that it is not easy to touch the temperature adjusting switch when adjusting the flow rate, it conforms with the human being's habit.

To realize the linkage of the first rotating adjusting portion 31 and the adjusting element, the detailed structure of this embodiment is that:
The adjusting element comprises a central rod 30, the external periphery of the central rod 30 is disposed with a first driving mechanism and a second driving mechanism arranged in the axial direction, the first driving mechanism is a second external spline 301, the second driving mechanism is an external hexagon 302.

On the other hand, the first rotating adjusting portion 31 comprises a spline rod 311, the external periphery of one end of the spline rod 311 is disposed with a first external spline 312, the other end is coupled to the second external spline 301 in coaxially rotating way; therefore, when the first external spline 312 rotates, the spline rod 311 and the central rod 30 rotate coaxially.

To realize the flow rate adjusting, the flow rate adjusting portion 33 comprises a rotating rod 331 and a first guiding rod 332 arranged coaxially; one end of the rotating rod 331 is disposed with an internal hexagon 333 coupled to the external hexagon 302, so that when the central rod 30 rotates, the rotating rod 331 rotates coaxially. The other end of the rotating rod 331 is coupled to one end of the first guiding rod 332 by a first driving thread 334. When the rotating rod 331 rotates, the first guiding rod 332 moves up and down in the axial direction.

The end of the first guiding rod 332 is vertically connected to the mixing water outlet 13; the mixing water outlet 13 is disposed with a first sealing pad 131 coupled to the end of the first guiding rod 332, when the end of the first guiding rod 332 moves to abut against the first sealing pad 131, the mixing water outlet 13 is fully closed.

With above mentioned configuration, when the first external spline 312 at the top end of the spline rod 311 rotates, the central rod 30 and the rotating rod 331 rotate coaxially with the spline rod 311, the first guiding rod 332 moves up and down in the axial direction, so that the portion of the end of the first guiding rod 332 vertically connected to the mixing water outlet 13 extends or shrinks back, therefore, the flowing area of the mixing water outlet changes with the rotating of the spline rod 311, the outlet flow rate changes as well.

To realize the linkage of the second rotating adjusting portion 32 and the adjusting element, the detailed structure of this embodiment is that:
The second rotating adjusting portion 32 comprises an adjusting rod 321 and a press rod 322 coaxially arranged with the central rod 30; the adjusting rod 321 is coupled to one end of the press rod 322 by a second driving thread 323, so that when the adjusting rod 321 rotates, the press rod 322 moves up and down in the axial direction.

The other end of the press rod 322 abuts against the central rod 30, so that the press rod 322 is linked to the central rod 30 in the axial direction. It thus achieves the linkage of the second rotating adjusting portion 32 and the adjusting element.

To realize temperature adjusting: the temperature adjusting portion 34 comprises a second guiding rod 341 and a plunger 342; the second guiding rod 341 is disposed between the thermosensitive element 2 and the central rod 30, the second guiding rod 341 is respectively linked to the thermosensitive element 2 and the central rod 30. The detailed structure is that: the central rod 30 is disposed with an accommodating chamber 303, one end of the second guiding rod 341 is inserted to the accommodating chamber 303 to link to the central rod 30, the other end is exposed out of the central rod 30 and is disposed with a second external hexagon 347, one end of the thermosensitive element 2 is inserted to the second guiding rod 341 and fixed by a press cover 23 and the nut 24 to realize linkage.

The plunger 342 is disposed at the external periphery of the flexible port 22 of the thermosensitive element 2, it is linked to the thermosensitive element 2 in the axial direction. Two ends of the plunger 342 are respectively vertically connected to the cool water inlet 11 and the hot water inlet 12, the hot water inlet 12 is disposed with a second sealing pad 121 coupled to one end of the plunger 342, when this end of the plunger 342 moves to abut against the second sealing pad, the hot water inlet 12 is fully closed.

Therefore, when the user rotates the adjusting rod 321, the press rod 322 moves up and down in the axial direction under the action of the second driving thread 323, thus driving the central rod 30 to move, so that the second guiding rod 341 drives the thermosensitive element 2 and the plunger 342 to move up and down in the axial direction, it thus changes the length of two ends of the plunger 342 connected to the cool water inlet 11 and the hot water inlet 12, it also then changes the flowing area of the cool water inlet 11 and the hot water inlet 12. The mixing proportion of the hot water and cool water in the valve body 1 changes as well, the outlet temperature of the mixing water outlet 13 changes correspondingly. When the cool water inlet 11 is invalid, the thermosensitive port 21 of the thermosensitive element 2 senses that the outlet temperature rises rapidly, the flexible port 22 extends to drive the plunger 342 to move downwardly, when the plunger 342 moves to make its one end abut against the second sealing pad 121, the hot water inlet 12 is fully closed. Therefore, it makes sure that when the cool water inlet is invalid, the hot water inlet 12 can be closed in time, so that hot water would not flow out to scald the user.

The cooperation of the plunger 342 and the thermosensitive element 2 can realize constant temperature adjusting, when the user adjusts the adjusting rod 321 to set the mixing proportion of hot water and cool water, as the water pressure increases or the flow rate increases, it may cause the inlet flow rate of hot water and cool water to change, thus making the mixing water has higher temperature or lower temperature. When the thermosensitive element 2 senses that the temperature of the mixing water outlet 13 is too high, the flexible port 22 extends, the plunger 22 slides towards the hot water inlet 12, thus reducing the flow rate of the hot water inlet 12; when the thermosensitive element 2 senses that the temperature of the mixing water outlet 13 is too low, the flexible port 22 shrinks back, the plunger 22 slides towards the cool water inlet 11, thus reducing the flow rate of the cool water inlet 11. It achieves real-time adjusting, thus ensuring the constant temperature effect. To improve the mixing effect of the hot water and cool water, and to make the thermosensitive port of the thermosensitive element 2 sense the temperature more accurately near to the outlet temperature to ensure the stability of the constant temperature adjusting, the temperature adjusting portion 34 further comprises a mixer 343, one end of the mixer 343 is linked to the second guiding rod 341, the other end is linked to the plunger 342, the mixer 343 is disposed with a plurality of mixing holes 344; water from the cool water inlet 11 and the hot water inlet 12 is mixed in the water mixer through the mixing holes 344 and flows out of the mixing water outlet 13.

As the hot water and the cool water is mixed by the mixer 343, the mixing water then flows to the thermosensitive port 21 of the thermosensitive element 2, the thermosensitive port 21 of the thermosensitive element 2 senses the outlet temperature more accurately, the constant temperature controlling is further guaranteed.

The side surface of the external periphery of the plunger 342 is disposed with a first sealing ring 345 and a second sealing ring 346 parallel arranged to contact with the internal wall of the lower housing 15. It avoids the plunger 342 from shaking or block when the water pressure increases or the water pressure suddenly changes.

To make the external housing 14 and the lower housing 15 fixedly connected, the end of the first guiding rod 332 is disposed with an internal hexagon 334, the top end of the lower housing 15 is disposed with a second internal hexagon 151 and a third external hexagon 152 concentrically, with the cooperation of the internal hexagon 334 and the third external hexagon 152, the cooperation of the second external hexagon 347 and the second internal hexagon 151, the top end of the lower housing 15 is fixedly connected between the first guiding rod 332 and the second guiding rod 341.

The present invention may be summarized as follows: The present invention is provided with a double-handle coaxial temperature control valve spool, which comprises: a valve body, the valve body is disposed with a cool water inlet, a hot water inlet and a mixing water outlet; a thermosensitive element with a thermosensitive port and a flexible port, the thermosensitive port is near to the mixing water outlet to sense the outlet temperature of the mixing water outlet and send the outlet temperature information to the flexible port; an adjusting element with a first rotating adjusting portion and a second rotating adjusting portion coaxially arranged from top to bottom; the first rotating adjusting portion is linked to a flow rate adjusting portion, when rotating the first rotating adjusting portion, the flow rate adjusting portion opens or closes the mixing water outlet; the second rotating adjusting portion is linked to a temperature adjusting portion, when rotating the second rotating adjusting portion, the temperature adjusting portion adjusts the flowing area of the cool water inlet and the hot water inlet. The double-handle coaxial temperature control valve spool is provided that the upper rotating portion is used to open the mixing water outlet, the lower rotating portion is used to adjust the outlet temperature of the mixing water outlet.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A double-handle coaxial temperature control valve spool, comprising:
a valve body (1), the valve body (1) is disposed with a cool water inlet (11), a hot water inlet (12) and a mixing water outlet (13);
a thermosensitive element (2) with a thermosensitive port (21) and a flexible port (22), the thermosensitive port (21) is near to the mixing water outlet (13) to sense the outlet temperature of the mixing water outlet (13) and send the outlet temperature information to the flexible port (22);
an adjusting element with a first rotating adjusting portion (31) and a second rotating adjusting portion (32) coaxially arranged from top to bottom; the first rotating adjusting portion (31) is linked to a flow rate adjusting portion (33), when rotating the first rotating adjusting portion (31), the flow rate adjusting portion (33) opens or closes the mixing water outlet (13) in an axial direction; the second rotating adjusting portion (32) is linked to a temperature adjusting portion (34), when rotating the second rotating adjusting portion (32), the temperature adjusting portion (34) adjusts the flowing area of the cool water inlet (11) and the hot water inlet (12),
**characterized in that** the second rotating adjusting portion (32) is arranged between a first external spline (312) of the first rotating adjusting portion (31) and the mixing water outlet (13).

2. The double-handle coaxial temperature control valve spool according to claim 1, wherein the adjusting element comprises a central rod (30), the external periphery of the central rod (30) is disposed with a first driving mechanism and a second driving mechanism in the axial direction.

3. The double-handle coaxial temperature control valve spool according to claim 2, wherein the first rotating adjusting portion (31) comprises a spline rod (311), the external periphery of one end of the spline rod (311) is disposed with the first external spline (312); when rotating the first external spline (312), the spline rod (311) and the central rod (30) rotate coaxially by the first driving mechanism.

4. The double-handle coaxial temperature control valve spool according to claim 2 and/or 3, wherein the flow rate adjusting portion (33) comprises a rotating rod (331) and a first guiding rod (332) coaxially arranged; when the central rod (30) rotates, the rotating rod (331) rotates coaxially by the second driving mechanism; the rotating rod (331) couples to the first guiding rod (332) by a first driving thread (334), when the rotating rod (331) rotates, the first guiding rod (332) moves up and down in the axial direction.

5. The double-handle temperature control valve spool according to claim 4, wherein the end of the first guiding rod (332) is vertically connected to the mixing water outlet (13); the mixing water outlet (13) is disposed with a first sealing pad (131) coupled to the end of the first guiding rod (332), when the end of the first guiding rod (332) moves to abut against the first sealing pad (131), the mixing water outlet (13) is fully closed.

6. The double-handle coaxial temperature control valve spool according to any one or more of claims 2 to 5, wherein the first driving mechanism is a second external spline (301), the second driving mechanism is an external hexagon element (302).

7. The double-handle coaxial temperature control valve spool according to any one or more of claims 2 to 6, wherein the second rotating adjusting portion (32) comprises an adjusting rod (321) and a press rod (322) coaxially arranged with the central rod (30); the adjusting rod (321) is coupled to one end of the press rod (322) by a second driving thread (323), when the adjusting rod (321) rotates, the press rod (322) moves up and down in the axial direction.

8. The double-handle coaxial temperature control valve spool according to claim 7, wherein the other end of the press rod (322) is linked to the central rod (30) in the axial direction.

9. The double-handle coaxial temperature control valve spool according to any one or more of claims 2 to 8, wherein the temperature adjusting portion (34) comprises a second guiding rod (341) and a plunger (342); the second guiding rod (341) is disposed between the thermosensitive element (2) and the central rod (30), the second guiding rod (341) is respectively linked to the thermosensitive element (2) and the central rod (30) in the axial direction; the plunger (342) is coaxially disposed at the external periphery of the flexible port (22) of the thermosensitive element (2) and is linked to the thermosensitive element (2) in the axial direction.

10. The double-handle coaxial temperature control valve spool according to claim 9, wherein two ends of the plunger (342) are respectively vertically connected to the cool water inlet (11) and the hot water inlet (12), the hot water inlet (12) is disposed with a second sealing pad (121) coupled to one end of the plunger (342), when this end of the plunger (342) moves to abut against the second sealing pad (121), the hot water inlet (12) is fully closed.

11. The double-handle coaxial temperature control valve spool according to claim 9 and/or 10, wherein the valve body (1) comprises an external housing (14) and a lower housing (15), the external periphery surface of the lower housing (15) is disposed with the cool water inlet (11) and the hot water inlet (12) coaxially from top to bottom; the mixing water outlet (13) is disposed at the external periphery of the external housing (14); the top end of the lower housing (15) extends into the external housing (14) and is respectively connected to the first guiding rod (332) and the second guiding rod (341) by hexagon connecting or thread connecting.

12. The double-handle coaxial temperature control valve spool according to claim 11, wherein the side of the external periphery of the plunger (342) is disposed with a first sealing ring (345) and a second sealing ring (346) parallel arranged to contact with the internal wall of the lower housing (15).

## Patentansprüche

1. Ein koaxialer Temperatursteuerventilschieber mit Doppelgriff, der folgendes aufweist:
einen Ventilkörper (1), der Ventilkörper (1) ist mit einem Kaltwassereinlass (11), einem Heißwassereinlass (12) und einem Mischwasserauslass (13) angeordnet;
ein wärmeempfindliches Element (2) mit einem wärmeempfindlichen Anschluss (21) und einem flexiblen Anschluss (22), der wärmeempfindliche Anschluss (21) ist in der Nähe zu dem Mischwasserauslasses (13), um die Auslasstemperatur des Mischwasserauslasses (13) abzufühlen und die Auslasstemperaturinformation an den flexiblen Anschluss (22) zu senden;
ein Einstellelement mit einem ersten Dreheinstellteil (31) und einem zweiten Dreheinstellteil (32), die koaxial von oben nach unten angeordnet sind; der erste Dreheinstellteil (31) ist mit einem Strömungsrateneinstellteil (33) verbunden, wenn der erste Dreheinstellteil (31) gedreht wird, öffnet oder schließt der Strömungsrateneinstellteil (33) den Mischwasserauslass (13) in einer axialen Richtung; der zweite Dreheinstellteil (32) ist mit einem Temperatureinstellteil (34) verbunden, wenn der zweite Dreheinstellteil (32) gedreht wird, stellt der Temperatureinstellteil (34) den Strömungsfläche des Kaltwassereinlasses (11) und des Heißwassereinlasses (12) ein, **dadurch gekennzeichnet, dass** der
zweite Dreheinstellteil (32) zwischen einem ersten Außenkeil (312) des ersten Dreheinstellteils (31) und dem Mischwasserauslass (13) angeordnet ist.

2. Der koaxiale Temperatursteuerventilschieber mit Doppelgriff nach Anspruch 1, wobei das Einstellelement eine Mittelstange (30) aufweist, der Außenumfang der Mittelstange (30) ist mit einem ersten Antriebsmechanismus und einem zweiten Antriebsmechanismus in der axialen Richtung angeordnet.

3. Der koaxiale Temperatursteuerventilschieber mit Doppelgriff nach Anspruch 2, wobei der erste Dreheinstellteil (31) eine Keilstange (311) aufweist, der Außenumfang von einem Endes der Keilstange (311) ist mit dem ersten Außenkeil (312) angeordnet;
wenn der erste Außenkeil (312) gedreht wird, drehen sich die Keilstange (311) und die Mittelstange (30) koaxial durch den ersten Antriebsmechanismus.

4. Der koaxiale Temperatursteuerventilschieber mit Doppelgriff nach Anspruch 2 und/oder 3, wobei der Strömungsrateneinstellteil (33) eine Drehstange (331) und eine erste Führungsstange (332) aufweist, die koaxial angeordnet sind; wenn sich die Mittelstange (30) dreht, dreht sich die Drehstange (331) koaxial durch den zweiten Antriebsmechanismus; die Drehstange (331) kuppelt mit der ersten Führungsstange (332) durch ein erstes Antriebsgewinde (334), wenn sich die Drehstange (311) dreht, bewegt sich die erste Führungsstange (332) in der axialen Richtung auf und ab.

5. Der koaxiale Temperatursteuerventilschieber mit Doppelgriff nach Anspruch 4, wobei das Ende der ersten Führungsstange (332) vertikal mit dem Mischwasserauslass (13) verbunden ist; der Mischwasserauslass (13) ist mit einem ersten Dichtungskissen (131) angeordnet, das mit dem Ende der ersten Führungsstange (332) gekuppelt ist, wenn sich das Ende der ersten Führungsstange (332) bewegt, um gegen das erste Dichtungskissen (131) anzuliegen, ist der Mischwasserauslass (13) vollständig geschlossen.

6. Der koaxiale Temperatursteuerventilschieber mit Doppelgriff nach einem oder mehreren der Ansprüche 2 bis 5, wobei der erste Antriebsmechanismus ein zweiter Außenkeil (301) ist, der zweite Antriebsmechanismus ist ein Außensechskantelement (302).

7. Der koaxiale Temperatursteuerventilschieber mit Doppelgriff nach einem oder mehreren der Ansprüche 2 bis 6, wobei der zweite Dreheinstellteil (32) eine Einstellstange (321) und eine Druckstange (322) aufweist, die koaxial mit der Mittelstange (30) angeordnet sind; die Einstellstange (321) ist mit einem Ende der Druckstange (322) gekuppelt, und zwar durch ein zweites Antriebsgewinde (323), wenn sich die Einstellstange (321) dreht, bewegt sich die Druckstange (322) in der axialen Richtung auf und ab.

8. Der koaxiale Temperatursteuerventilschieber mit Doppelgriff nach Anspruch 7, wobei das andere Ende der Druckstange (322) mit der Mittelstange (30) in der axialen Richtung verbunden ist.

9. Der koaxiale Temperatursteuerventilschieber mit Doppelgriff nach einem oder mehreren der Ansprüche 2 bis 8, wobei der Temperatureinstellteil (34) eine zweite Führungsstange (341) und einen Kolben (342) aufweist; die zweite Führungsstange (341) ist zwischen dem wärmeempfindlichen Element (2) und der Mittelstange (30) angeordnet, die zweite Führungsstange (341) ist jeweils mit dem wärmeempfindlichen Element (2) und der Mittelstange (30) in der axialen Richtung verbunden; der Kolben (342) ist koaxial an dem Außenumfang des flexiblen Anschlusses (22) des wärmeempfindlichen Elements (2) angeordnet und mit dem wärmeempfindlichen Element (2) in der axialen Richtung verbunden.

10. Der koaxiale Temperatursteuerventilschieber mit Doppelgriff nach Anspruch 9, wobei zwei Enden des Kolbens (342) jeweils vertikal mit dem Kaltwassereinlass (11) und dem Heißwassereinlass (12) verbunden sind, der Heißwassereinlass (12) ist mit einem zweiten Dichtungskissen (121) angeordnet, das mit einem Ende des Kolbens (342) gekuppelt ist, wenn dieses Ende des Kolbens (342) sich bewegt, um gegen das zweite Dichtungskissen (121) anzuliegen, ist der Heißwassereinlass (12) vollständig geschlossen.

11. Der koaxiale Temperatursteuerventilschieber mit Doppelgriff nach Anspruch 9 und/oder 10, wobei der Ventilkörper (1) ein Außengehäuse (14) und ein unteres Gehäuse (15) aufweist, die Außenumfangsoberfläche des unteren Gehäuses (15) ist mit dem Kaltwassereinlass (11) und dem Heißwassereinlass (12) koaxial von oben nach unten angeordnet; der Mischwasserauslass (13) ist an dem Außenumfang des Außengehäuses (14) angeordnet; das obere Ende des unteren Gehäuses (15) erstreckt sich in das Außengehäuse (14) und ist jeweils mit der ersten Führungsstange (332) und der zweiten Führungsstange (341) durch Sechskantverbindung oder Gewindeverbindung verbunden.

12. Der koaxiale Temperatursteuerventilschieber mit Doppelgriff nach Anspruch 11, wobei die Seite des Außenumfangs des Kolbens (342) mit einem ersten Dichtungsring (345) und einem zweiten Dichtungsring (346) angeordnet ist, und zwar parallel angeordnet, um die Innenwand des unteren Gehäuses (15) zu kontaktieren.

## Revendications

1. Tiroir de vanne de commande de température coaxial à double levier, comprenant :
un corps de vanne (1), le corps de vanne (1) est disposé avec une entrée d'eau froide (11), une entrée d'eau chaude (12) et une sortie d'eau de mélange (13) ;
un élément thermosensible (2) avec un orifice thermosensible (21) et un orifice flexible (22), l'orifice thermosensible (21) est proche de la sortie d'eau de mélange (13) pour capter la température de sortie de la sortie d'eau de mélange (13) et envoyer les informations de température de sortie à l'orifice flexible (22) ;
un élément d'ajustement avec une première partie d'ajustement rotative (31) et une deuxième partie d'ajustement rotative (32) arrangées coaxialement de haut en bas ; la première partie d'ajustement rotative (31) est liée à une partie d'ajustement de débit (33), lors de la rotation de la première partie d'ajustement rotative (31), la partie d'ajustement de débit (33) ouvre ou ferme la sortie d'eau de mélange (13) dans une direction axiale ; la deuxième partie d'ajustement rotative (32) est liée à une partie d'ajustement de température (34), lors de la rotation de la deuxième partie d'ajustement rotative (32), la partie d'ajustement de température (34) ajuste l'aire d'écoulement de l'entrée d'eau froide (11) et de l'entrée d'eau chaude (12),
**caractérisé en ce que** la deuxième partie d'ajustement rotative (32) est arrangée entre une première cannelure externe (312) de la première partie d'ajustement rotative (31) et la sortie d'eau de mélange (13).

2. Tiroir de vanne de commande de température coaxial à double levier selon la revendication 1, dans lequel l'élément d'ajustement comprend une tige centrale (30), la périphérie externe de la tige centrale (30) est disposée avec un premier mécanisme d'entraînement et un deuxième mécanisme d'entraînement dans la direction axiale.

3. Tiroir de vanne de commande de température coaxial à double levier selon la revendication 2, dans lequel la première partie d'ajustement rotative (31) comprend une tige cannelée (311), la périphérie externe d'une extrémité de la tige cannelée (311) est disposée avec la première cannelure externe (312) ; lors de la rotation de la première cannelure externe (312), la tige cannelée (311) et la tige centrale (30) sont tournées coaxialement par le premier mécanisme d'entraînement.

4. Tiroir de vanne de commande de température coaxial à double levier selon la revendication 2 et/ou 3, dans lequel la partie d'ajustement de débit (33) comprend une tige rotative (331) et une première tige de guidage (332) arrangées coaxialement ; quand la tige centrale (30) tourne, la tige rotative (331) est tournée coaxialement par le deuxième mécanisme d'entraînement ; la tige rotative (331) est couplée à la première tige de guidage (332) par un premier filetage d'entraînement (334), quand la tige rotative (331) tourne, la première tige de guidage (332) monte et descend dans la direction axiale.

5. Tiroir de vanne de commande de température coaxial à double levier selon la revendication 4, dans lequel l'extrémité de la première tige de guidage (332) est reliée verticalement à la sortie d'eau de mélange (13) ; la sortie d'eau de mélange (13) est disposée avec un premier joint d'étanchéité (131) couplé à l'extrémité de la première tige de guidage (332), quand l'extrémité de la première tige de guidage (332) se déplace pour buter contre le premier joint d'étanchéité (131), la sortie d'eau de mélange (13) est complètement fermée.

6. Tiroir de vanne de commande de température coaxial à double levier selon l'une ou plus des revendications 2 à 5, dans lequel le premier mécanisme d'entraînement est un élément hexagonal externe (302).

7. Tiroir de vanne de commande de température coaxial à double levier selon l'une ou plus des revendications 2 à 6, dans lequel la deuxième partie d'ajustement rotative (32) comprend une tige d'ajustement (321) et une tige de pression (322) arrangées coaxialement avec la tige centrale (30) ; la tige d'ajustement (321) est couplée à une extrémité de la tige de pression (322) par un deuxième filetage d'entraînement (323), quand la tige d'ajustement (321) tourne, la tige de pression (322) monte et descend dans la direction axiale.

8. Tiroir de vanne de commande de température coaxial à double levier selon la revendication 7, dans lequel l'autre extrémité de la tige de pression (322) est liée à la tige centrale (30) dans la direction axiale.

9. Tiroir de vanne de commande de température coaxial à double levier selon l'une ou plus des revendications 2 à 8, dans lequel la partie d'ajustement de température (34) comprend une deuxième tige de guidage (341) et un piston (342) ; la deuxième tige de guidage (341) est disposée entre l'élément thermosensible (2) et la tige centrale (30), la deuxième tige de guidage (341) est liée respectivement à l'élément thermosensible (2) et à la tige centrale (30) dans la direction axiale ; le piston (342) est disposé coaxialement à la périphérie externe de l'orifice flexible (22) de l'élément thermosensible (2) et est lié à l'élément thermosensible (2) dans la direction axiale.

10. Tiroir de vanne de commande de température coaxial à double levier selon la revendication 9, dans lequel deux extrémités du piston (342) sont reliées respectivement verticalement à l'entrée d'eau froide (11) et à l'entrée d'eau chaude (12), l'entrée d'eau chaude (12) est disposée avec un deuxième joint d'étanchéité (121) couplé à une extrémité du piston (342), quand cette extrémité du piston (342) se déplace pour buter contre le deuxième joint d'étanchéité (121), l'entrée d'eau chaude (12) est complètement fermée.

11. Tiroir de vanne de commande de température coaxial à double levier selon la revendication 9 et/ou 10, dans lequel le corps de vanne (1) comprend un logement externe (14) et un logement inférieur (15), la surface périphérique externe du logement inférieur (15) est disposée avec l'entrée d'eau froide (11) et l'entrée d'eau chaude (12) coaxialement de haut en bas; la sortie d'eau de mélange (13) est disposée à la périphérie externe du logement externe (14) ; l'extrémité supérieure du logement inférieur (15) s'étend jusque dans le logement externe (14) et est reliée respectivement à la première tige de guidage (332) et à la deuxième tige de guidage (341) par liaison hexagonale ou liaison par filetage.

12. Tiroir de vanne de commande de température coaxial à double levier selon la revendication 11, dans lequel le côté de la périphérie externe du piston (342) est disposé avec une première bague d'étanchéité (345) et une deuxième bague d'étanchéité (346) arrangées parallèlement pour être en contact avec la paroi interne du logement inférieur (15).
